# EUROPEAN PATENT SPECIFICATION

(11) **EP 2 139 138 B1**
(45) Date of publication and mention of the grant of the patent: **19.06.2013**
(21) Application number: 08305317.3
(22) Date of filing: 24.06.2008
(51) Int. Cl.: H04L 1/00, H04B 17/00

(54) **Radio link adaption of a channel between a first network element and a second network element in a communication network**
Funkstreckenadaption eines Kanals zwischen einem ersten Netzelement und einem zweiten Netzelement in einem Kommunikationsnetzwerk
Adaptation de liaison radio d'un canal entre un premier élément de réseau et un deuxième élément de réseau dans un réseau de communication

(43) Date of publication of application: 30.12.2009
(73) Proprietor: Alcatel Lucent, 75007 Paris (FR)
(72) Inventor: Klein, Siegfried, 70469 Stuttgart (DE)
(74) Representative: Urlichs, Stefan

(56) References cited:
- WO-A-2004/088907
- WO-A-2006/075208
- WO-A-2007/025139
- US-A1- 2006 114 858

## Description

The invention relates to a method for radio link adaptation according to the preamble of claim 1, a network element according to the preamble of claim 8 and a communication network according to the preamble of claim 9.

In wireless communication systems like e.g. Universal Mobile Telecommunications System (UMTS), Third Generation Partnership Project Long Term Evolution (3GPP LTE) or Worldwide Interoperability for Microwave Access (WIMAX), information is transmitted by modulation of a carrier signal. Decoding errors are caused by distortions like e.g. interference or noise of the signal in the radio channel. Channel coding fights this problem by adding redundancy to the information.

The ratio R = Information/(Information + Redundancy) is called code rate. In LTE e.g., code rates range from 1/9 to 9/10 dependent on the modulation scheme.

Depending on the channel's signal-to-interference-and-noise ratio, parameters or parameter combinations defining the radio transmission over a channel between two network elements, such as power, modulation or coding schemes or combination of these parameters, have a different performance, and are thus chosen dependent on values indicating the quality of the channel. Said values indicating the quality of the channel are typically called CQI values (CQI = channel quality indicator).

According to a common approach to select parameters or parameter combinations defining the radio transmission based on a CQI value, said parameters or parameter combinations defining the radio transmission available in the communication system are arranged in a table according to an increasing threshold value for the CQI value associated with a predefined transport capacity. The threshold value for the CQI value is chosen in such a way, that a corresponding transport capacity of the transmission is equal to a predefined threshold. The threshold value for the CQI value governs the usage of the parameters or parameter combinations defining the radio transmission. All parameters or parameter combinations for which the threshold value is lower than the actual CQI value are candidates that can be used for transmission. The parameter or parameter combination with the highest potential transport capacity will be employed. This scheme is denoted Table Driven Link Adaptation.

In the patent application WO 2004/088907 A2, systems and techniques are disclosed which involve measuring a quality of a transmission from a remote location, and identifying a data rate as a function of the measured quality. An SINR prediction value is combined with the standard deviation of the prediction error, and the result is used to choose the DRC index with the highest data rate.

In the patent application US 2006/0114858 A1, a system and method for rate control based on an effective SNR value are disclosed. The effective SNR value is calculated based on a combination of the average SNR value with the SNR variance.

In the patent application WO 2007/025139 A2, a system and method for improving reliability of signaling are disclosed. For judging whether a received TFCI code word is reliable or not, a received SINR value is compared with an SINR threshold. For calculation of the SINR threshold, a target SINR is combined with an SINR offset, which is calculated based on the variance of the received SINR value. A TFCI code word can be transmitted with improved reliability if needed.

In the international patent application PCT/IB2005/003784, link adaptation by means of selection of a modulation and coding scheme (MCS) for high speed downlink packet access (HSDPA) is disclosed. The link adaptation is based on corrected CQI values, which take into account the age of the CQI values. As newer CQI reports generally reflect the current channel conditions more reliably than old ones, it is proposed to use a modulation and coding scheme that is more fault-tolerant, if the CQI report is relatively old. Thus, the corrected CQI value is equal to the most recent CQI value reduced by an offset value which is a function of the age of the most recent CQI value.

However, an offset value that is increasing with the age of the most recent CQI value is in most of the real situations not an adequate model, as normally, the channel quality is not deteriorating in the course of time. As a consequence, the corrected CQI value will be too low for old CQI values, and the chosen modulation and coding scheme is too fault-tolerant with a transport capacity below the optimum.

The object of the invention is thus to propose a method for radio link adaptation based on a corrected CQI value which is a better approximation of the actual CQI value and which is thus more appropriate. This object is achieved by a method for radio link adaptation according to the teaching of claim 1, a network element according to the teaching of claim 8, and a communication network according to the teaching of claim 9.

The main idea of the invention is to determine fluctuations of the CQI value for various points in time, and to use said fluctuations to calculate a corrected CQI value. Said corrected CQI value in turn is used to choose at least one parameter defining the radio transmission over the channel.

Further developments of the invention can be gathered from the dependent claims and the following description.

In the following the invention will be explained further making reference to the attached drawings.

Fig. 1 schematically shows a cellular communication network comprising base stations and terminals in which the invention can be implemented.

Fig. 2 schematically shows the LTE transport capacity of the transmission dependent on the signal-to-interference-and-noise ratio for different modulation and coding schemes.

Fig. 3 schematically shows a processing chain that is used for calculation of a corrected CQI value according to the invention.

A communication network in which the invention can be implemented comprises various network elements like user terminals or base stations.

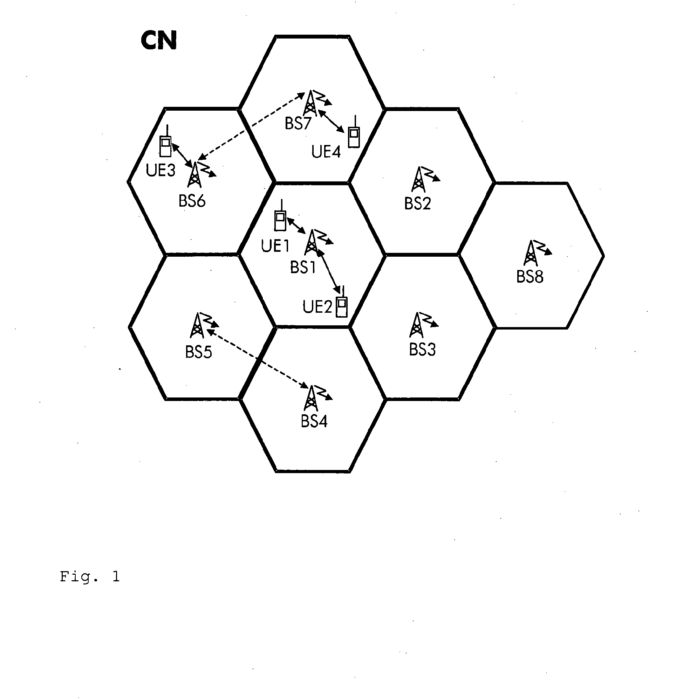

Fig. 1 shows an example for such a network CN that comprises base stations BS1-BS8 and user terminals UE1-UE4.

Each of said user terminals UE1-UE4 is connected to one or multiple of said base stations BS1-BS8, which is symbolized by double arrows in fig. 1. The base stations BS1-BS8 are in turn connected to a core network, which is not shown in fig. 1 for the sake of simplicity.

In an embodiment of the invention, the base station BS4 is connected to the base station BS5, and the base station BS6 is connected to the base station BS7 via radio connections, which is symbolized by dashed double arrows in fig. 1.

The user terminals UE1-UE4 comprise the functionality of a user terminal for transmission and reception of signaling and data messages in a network using radio transmission.

Furthermore, the user terminals UE1-UE4 comprise the functionality to determine CQI values based on measurements of a radio channel.

The base stations BS1-BS8 comprise the functionality of a base station of a network using radio transmission, i.e. they provide the possibility for user terminals to get connected to said network and for data exchange of said user terminals by means of radio transmission.

Said base stations BS1-BS8 also comprise the functionality to select at least one parameter defining the radio transmission over a radio channel dependent on a received CQI value of said radio channel.

Furthermore, a base station BS1-BS8 according to the invention is adapted to determine fluctuations of values indicating a quality of the channel, i.e. CQI values, measured at various points in time, calculate based on said fluctuations a corrected value indicating a quality of the channel, and choose at least one parameter defining the radio transmission over the channel based on said corrected value indicating a quality of the channel.

In an embodiment of the invention, the base stations BS1-BS8 comprise the functionality to determine CQI values based on measurements of a radio channel.

The base stations BS1-BS8 support a multitude of parameters or parameter combinations defining the radio transmission over a channel between two network elements, such as power, modulation or coding schemes or combination of theses parameters, like the modulation and coding schemes (MCS).

The selection of e.g. a modulation and coding scheme (MCS) is based on the channel quality information available as CQI values, which is in our embodiment depicted in fig. 1 reported by the user terminals UE1-UE4 to the respective connected base station BS1, BS6 and BS7. In another embodiment, it is also possible, that CQI values are reported from a first base station BS4 to a second base station BS5. The modulation and coding schemes (MCS) available in the communication network are ordered in a table preferably according to an increasing threshold value for the CQI value that is associated with a predefined performance of the transmission. The threshold value for the CQI value is determined in such a way, that a corresponding transport capacity of the transmission, e.g. indicated in bits per symbol, is equal to a predefined threshold for the performance of the transmission. Alternatively, the threshold value for the CQI value is determined in such a way, that a corresponding frame or block error rate of the transmission is equal to a predefined threshold for the performance of the transmission. The threshold value for the CQI value governs the usage of a modulation and coding scheme. All modulation and coding schemes for which the threshold value for the CQI value is lower than the reported CQI value are candidates for transmission, and preferably, the modulation and coding scheme with the highest potential transport capacity will be employed. This scheme is denoted Table Driven Link Adaptation.

In another embodiment, for each reported CQI value, it can be calculated for which modulation and coding scheme the transport capacity of the transmission for the reported CQI value is higher than a predefined threshold for the performance of the transmission. Then, from all modulation and coding schemes with a transport capacity of the transmission for the reported CQI value higher than the predefined threshold for the performance of the transmission, the one with the highest potential transport capacity will be employed.

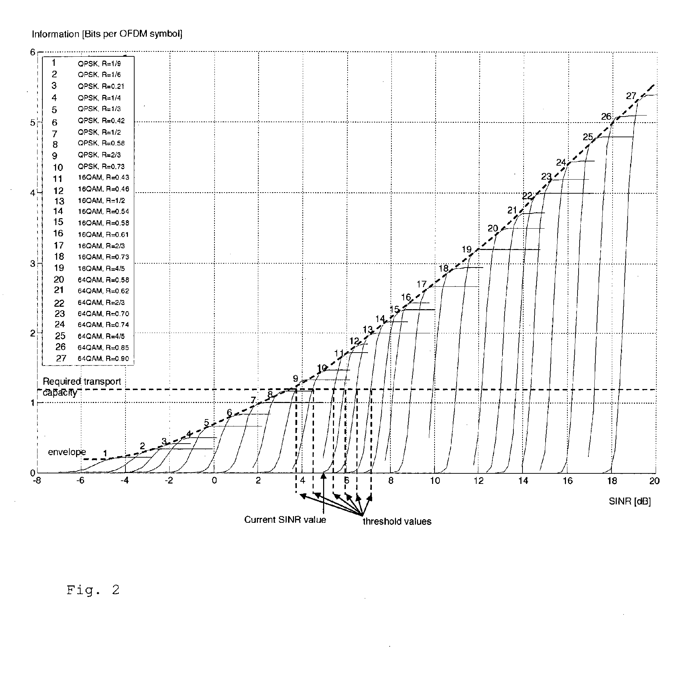

In fig. 2, the simulated LTE transport capacity of the transmission in bits per OFDM symbol is depicted dependent on the signal-to-interference-and-noise ratio (SINR) in dB for different modulation and coding schemes that are indicated by different numbers. The signal-to-interference-and-noise ratio is related to the channel quality indicator, i.e. a SINR value can be mapped on a CQI value. The modulation and coding schemes for which the LTE transport capacity is depicted are combinations of the modulation schemes Quadrature Phase Shift Keying (QPSK) and Quadrature Amplitude Modulation (QAM) with coding schemes with different coding rates R.

The predefined performance of the transmission, i.e. the required transport capacity of the transmission is depicted as a dotted horizontal line. The intersection point of said dotted line and the transport capacity of the transmission indicates for each modulation and coding scheme a threshold value for the SINR, which is indicated as vertical dotted lines. The SINR value must be equal to or higher than the threshold value for the SINR in order to achieve the required transport capacity with the respective modulation and coding scheme.

All modulation and coding schemes for which the threshold value for the SINR is lower than the current SINR value are candidates for transmission, and preferably, the modulation and coding scheme with the highest potential transport capacity will be employed. In the example depicted in fig. 2, the current SINR value is 5 dB, and the modulation and coding schemes numbered 9 and 10 are candidates for transmission. The modulation and coding scheme with number 10, i.e. QPSK with R=0.73 will be employed, as this is the scheme with the highest potential transport capacity in the vicinity of the SINR value of 5 dB.

As already described above, the modulation and coding schemes available in the communication network can be ordered in a table according to increasing threshold values for the SINR.

In another embodiment, the threshold value for the SINR of a modulation and coding scheme corresponds to the SINR value at which the simulated LTE transport capacity of the transmission for a modulation and coding scheme touches the envelope of all simulated LTE transport capacities, which is depicted as a dotted curve in fig. 2. Then, from all modulation and coding schemes with a threshold value for the SINR below the reported SINR value, the one with the highest threshold value for the SINR value is chosen for transmission.

According to the invention, fluctuations of CQI values measured by a network element UE1-UE4 or BS4-BS7 at various points in time are determined, said fluctuations are used for the calculation of a corrected CQI value in a network element UE1-UE4 or BS4-BS7, and said corrected CQI value is used to choose at least one parameter defining the radio transmission over the channel, which is preferably a power, a modulation or coding scheme or a combination of these parameters.

The at least one parameter defining the radio transmission over the channel is chosen based on said corrected CQI value in such a way, that either a corresponding frame or block error rate of the transmission is below a predefined threshold for the performance of the transmission, or a corresponding performance of the transmission, e.g. indicated in bits per symbol, is higher than a predefined threshold for the performance of the transmission.

A fluctuation as mentioned above can be the difference between two CQI values at different points in time. Preferably, said difference is periodically measured, and said fluctuations are differences between a first CQI value measured at point in time t1 and a second CQI value measured at point in time t1+Δt for various points in time t1.

Preferably, the difference can be subtracted from the most recent CQI value of said two CQI values, which leads to the corrected CQI value.

In an embodiment of the invention, said fluctuations are used for the calculation of a correction value, and said correction value is combined with the most recent CQI value to obtain the corrected CQI value.

Preferably, the most recent CQI value is added to said correction value multiplied by a factor and added to a bias, which results in the corrected CQI value.

In an embodiment of the invention, said correction value is the standard deviation of said differences.

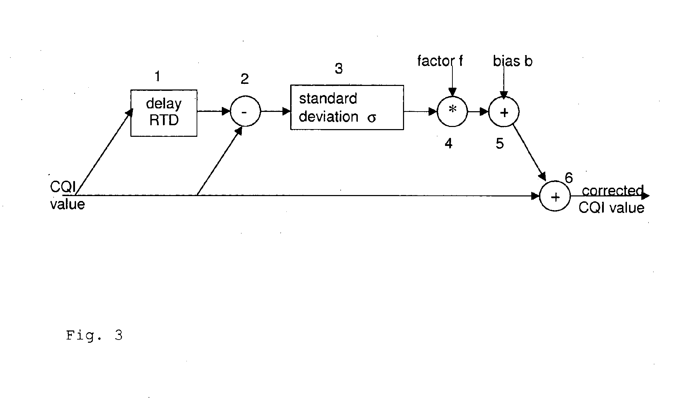

Fig. 3 shows a processing chain that is used for calculation of a corrected CQI value according to an embodiment of the invention and that is implemented in a network element as e.g. a user terminal UE1-UE4 or a base station BS1-BS8.

The network element uses CQI values to judge the quality of its radio channels. Therefore, the so-called self-similarity of the radio channel e.g. for a given round trip delay is analyzed. The self-similarity is derived from the behavior of the radio channel over time. It is calculated by comparing a sequence of CQI values against an identical but time-shifted copy of itself. The round trip delay RTD is defined as the time that elapses between the time of a CQI measurement in a network element and the time of a data transmission based on that CQI measurement, i.e. the round trip delay RTD is the shortest delay between the generation of a CQI value in a network element and the reception of a data packet which was transmitted based on said CQI value.

In a first step 1 in fig. 3, a CQI value at time t-RTD is determined by means of choosing the appropriate CQI value from a multitude of stored CQI values from the past.

In a second step 2, in order to find the self-similarity of a radio channel, the difference between a CQI value at time t and the CQI value at time t-RTD is calculated for multiple points in time t.

In a third step 3, said differences at multiple points in time t are stored, and the standard deviation of said differences is calculated.

In a fourth step 4, the standard deviation is multiplied by a factor f, and in a fifth step 5, a bias b is added to the standard deviation that has been multiplied by a factor f. This results after step 5 in a correction value for the CQI value. The default values, i.e. the normally used values, for factor f and bias b are f=-1 and b=0, which corresponds to the usage of the standard deviation as correction value.

In a sixth step 6, The calculated correction value for the CQI value is added to the most recent CQI value.

The corrected CQI value is used to look up e.g. a modulation and coding scheme in the link adaptation table as described above.

Simulations that have been performed show that by reducing the most recent CQI value by the standard deviation of the differences between the CQI value at time t and the CQI value at time t-RTD for multiple points in time t, the spectral efficiency in dense urban environments has been improved by about 10% compared with a table driven link adaptation algorithm according to the prior art.

It is to be expected, that the spectral efficiency can be further improved by means of performing simulations with different values for the factor f and the bias b in order to find out the most appropriate values for the factor f and the bias b.

## Claims

1. A ***method*** for radio link adaptation of a channel between a first network element (BS1-BS8) and a second network element (UE1-UE4) in a communication network (CN), wherein differences between a first value indicating a quality of the channel measured at point in time t1 and a second value indicating a quality of the channel measured at point in time t1+Δt for various points in time t1 are determined, ***characterized in,* that**
• said differences are used for the calculation of a standard deviation of said differences,
• said standard deviation of said differences is combined with the most recent value indicating a quality of the channel to obtain a corrected value indicating a quality of the channel,
• and said corrected value indicating a quality of the channel is used to choose at least one parameter defining the radio transmission over the channel.

2. A method according to claim 1, **characterized in, that** the most recent value indicating a quality of the channel is added to said correction value multiplied by a factor (f) and added to a bias (b), which results in the corrected value indicating a quality of the channel.

3. A method according to claim 1, **characterized in, that** said at least one parameter defining the radio transmission over the channel is at least one of a group of modulation and coding schemes that require a minimum value for the value indicating a quality of the channel that is below said corrected value indicating a quality of the channel.

4. A method according to claim 3, **characterized in, that** the modulation and coding scheme that provides the highest potential transport capacity is chosen from said group of modulation and coding schemes.

5. A **network element** (BS1-BS8) for radio link adaptation of a channel between the network element (BS1-BS8) and a second network element (UE1-UE4) in a communication network, wherein the network element (BS1-BS8) comprises at least one processing means adapted to determine differences between a first value indicating a quality of the channel measured at point in time t1 and a second value indicating a quality of the channel measured at point in time t1+Δt for various points in time t1, **characterized in, that** said at least one processing means is adapted to
• calculate a standard deviation of said differences,
• combine said standard deviation of said differences with the most recent value indicating a quality of the channel to obtain a corrected value indicating a quality of the channel,
• and choose at least one parameter defining the radio transmission over the channel based on said corrected value indicating a quality of the channel.

6. A **communication network** (CN) with at least one network element (BS1-BS8) for radio link adaptation of a channel between the at least one network element (BS1-BS8) and a second network element (UE1-UE4), **characterized in, that** the at least one network element (BS1-BS8) is a network element according to claim 5.

## Patentansprüche

1. **Verfahren** zur Funkstreckenadaption eines Kanals zwischen einem ersten Netzelement (BS1-BS8) und einem zweiten Netzelement (UE1-UE4) in einem Kommunikationsnetzwerk (cm), wobei Differenzen zwischen einem ersten Wert, welcher eine zu einem Zeitpunkt t1 gemessene Kanalqualität angibt, und einem zweiten Wert, welcher eine zu einem Zeitpunkt t1+Δt gemessene Kanalqualität angibt, für verschiedene Zeitpunkte t1 vermittelt werden, **dadurch gekennzeichnet, dass**
• die besagten Differenzen für die Berechnung einer Standardabweichung der besagten Differenzen verwendet werden,
• die besagte Standardabweichung der besagten Differenzen mit dem letzten Wert, welche einer Kanalqualität angibt, kombiniert wird, um einen korrigierten Wert, welcher eine Kanalqualität angibt, zu erhalten,
• und der besagte Wert, welcher eine Kanalqualität angibt, dazu verwendet wird, mindestens einen Parameter, welcher die Funkübertragung über den Kanal definiert, auszuwählen.

2. Verfahren nach Anspruch 1, **dadurch gekennzeichnet, dass** der letzte Wert, der eine Kanalqualität angibt, zu dem besagten Korrekturwert, multipliziert mit einem Faktor (f), und einem Versatzwert (b) hinzugefügt wird, wodurch der korrigierte Wert, welcher eine Kanalqualität angibt, erhalten wird.

3. Verfahren nach Anspruch 1, **dadurch gekennzeichnet, dass** der besagte mindestens eine Parameter, welcher die Funkübertragung über den Kanal definiert, mindestens einer Gruppe von Modulations- und Codierschemen, welche einen Mindestwert für den Wert, welcher eine Kanalqualität angibt, der niedriger ist als der besagte korrigierte Werft, welcher eine Kanatquatität angibt, erfordern, ist.

4. Verfahren nach Anspruch 3, **dadurch gekennzeichnet, dass** das Modulations- und Codierschema, welches die höchste potentielle Transportkapazität bereitstellt, aus der besagten Gruppe von Modulations- und Codierschemen gewählt wird.

5. **Netzelement** (BS1-BS8) zur Funkstreckenadaption eines Kanals zwischen dem Netzelement (BS1-BS8) und einem zweiten Netzelement (UE1-UE4) in einen Kommunikationsnetzwerk, wobei das Netzelement (BS1-BS8) mindestens ein Verarbeitungsmittel umfasst, welches dazu ausgelegt ist, Differenzen zwischen einem ersten Wert, welcher eine zu einem Zeitpunkt t1 gemessene Kanalqualität angibt, und einem zweiten Wert, welcher eine zu einem Zeitpunkt t1+Δt gemessene Kanalqualität angibt, für verschiedene Zeitpunkte t1 zu ermitteln, **dadurch gekenntzeichnet, dass** das besagte mindestens eine Verarbeitungsmittel für das Durchführen der folgenden Schritte ausgelegt ist:
• Berechnen einer Standardabweichung der besagten Differenzen,
• Kombinieren der besagten Standardabweichung der besagten Differenzen mit dem letzten Wert, welche einer Kanatqualität angibt, um einen korrigierten Wert, welcher eine Kanalqualität angibt, zu erhalten,
• und Auszählen mindestens eines Parameters, welcher die Funkübertragung über den Kanal definiert, auf Basis des besagten korrigierten Wertes, welcher eine Kanalqualität angibt.

6. **Kommunikationsnetzwerk** (CN) mit mindestens einem Netzelement (BS1-BS8) zur Funkstreckenadaption eines Kanals zwischen dem mindestens einen Netzelement (BS1-BS8) und einem zweiten Netzelement (UE1-UE4), **dadurch gekennzeichnet, dass** das mindestens eine Netzelement (BS1-BS8) ein Netzelement gemäß Anspruch 5 ist.

## Revendications

1. **Procédé** pour l'adaptation de liaison radio d'un canal entre un premier élément de réseau (BS1 à BS8) et un deuxième élément de réseau (UE1 à UE4) dans un réseau de communication (CN), dans lequel des différences entre une première valeur indiquant une qualité du canal mesurée à l'instant t1 et une deuxième valeur indiquant une qualité du canal mesurée à l'instant t1+Δt pour plusieurs instants t1 sont déterminées, **caractérisé en ce que**
• lesdites différences sont utilisées pour le calcul d'un écart type desdites différences,
• ledit écart type desdites différences est combiné à la valeur la plus récente indiquant une qualité du canal pour obtenir une valeur corrigée indiquant une qualité du canal,
• et ladite valeur corrigée indiquant une qualité du canal est utilisée pour choisir au moins un paramètre définissant la transmission radio sur le canal.

2. Procédé selon la revendication 1, **caractérisé en ce que** la valeur la plus récente indiquant une qualité du canal est ajoutée à ladite valeur de correction multipliée par un facteur (f) et ajoutée à une polarisation (b), ce qui a pour résultat la valeur corrigée indiquant une qualité du canal.

3. Procédé selon la revendication 1, **caractérisé en ce que** ledit au moins un paramètre définissant la transmission radio sur le canal est au moins un schéma de modulation et de codage parmi un groupe de schémas de modulation et de codage qui nécessitent une valeur minimum pour la valeur indiquant une qualité du canal qui est inférieure à ladite valeur corrigée indiquant une qualité du canal.

4. Procédé selon la revendication 3, **caractérisé en ce que** le schéma de modulation et de codage qui fournit la capacité de transport au potentiel le plus élevé est choisi parmi ledit groupe de schémas de modulation et de codage.

5. Élément de réseau (BS1 à BS8) pour l'adaptation de liaison radio d'un canal entre l'élément de réseau (BS1 à BS8) et un deuxième élément de réseau (UE1 à UE4) dans un réseau de communication, dans lequel l'élément de réseau (BS1 à BS8) comprend au moins un moyen de traitement adapté pour déterminer des différences entre une première valeur indiquant une qualité du canal mesurée à l'instant t1 et une deuxième valeur indiquant une qualité du canal mesurée à l'instant t1+Δt pour plusieurs instants t₁, **caractérisé en ce que** ledit au moins un moyen de traitement est adapté pour
• calculer un écart type desdites différences,
• combiner ledit écart type desdites différences avec la valeur la plus récente indiquant une qualité du canal pour obtenir une valeur corrigée indiquant une qualité du canal,
• et choisir au moins un paramètre définissant la transmission radio sur le canal en se basant sur ladite valeur corrigée indiquant une qualité du canal.

6. **Réseau de communication** (CN) avec au moins un élément de réseau (BS1 à BS8) pour l'adaptation de liaison radio d'un canal entre l'au moins un élément de réseau (BS1 à BS8) et un deuxième élément de réseau (UE1 à UE4), **caractérisé en ce que** l'au moins un élément de réseau (BS1 à BS8) est un élément de réseau selon la revendication 5.
